# EUROPÄISCHE PATENTSCHRIFT

(11) **EP 0 693 638 B1**
(45) Veröffentlichungstag und Bekanntmachung des Hinweises auf die Patenterteilung: **12.05.1999**
(21) Anmeldenummer: 95110868.7
(22) Anmeldetag: 12.07.1995
(51) Int. Cl.: F16G 13/16

(54) **Schleppkette zur Aufnahme mindestens eines Leitungsgliedes sowie Arbeitsverfahren zum Einlegen desselben in die Schleppkette**
Chain for carrying an energy line and method of introducing the line in the chain
Chaine de support d'au moins un conducteur d'énergie et procédé d'introduction du conducteur dans la chaine

(30) Priorität: 19.07.1994 CH 2289/94; 09.07.1995 CH 1988/95
(43) Veröffentlichungstag der Anmeldung: 24.01.1996
(73) Patentinhaber: ZINDEL CONSULTING, CH-8805 Richterswil (CH)
(72) Erfinder: Zindel, Jaques, CH-8805 Richterswil (CH)
(74) Vertreter: EGLI-EUROPEAN PATENT ATTORNEYS

(56) Entgegenhaltungen:
- GB-A- 1 012 432

## Beschreibung

Die Erfindung bezieht sich auf eine Schleppkette mit mehreren gelenkig miteinander verbundenen ersten und zweiten Kettengliedern, welche im Profilquerschnitt etwa ⊂-förmig ausgebildet und zusammen einen in Längsrichtung der Schleppkette orientierten Kabelkanal zur Aufnahme mindestens eines Leitungsgliedes bilden, mittels welchem einer relativ zu einer Energiequelle linear hin- und herbeweglichen Verbrauchereinheit Energie zuführbar ist. Weiterhin betrifft die Erfindung ein Arbeitsverfahren zum Einlegen des Leitungsgliedes in die Schleppkette.

Zum Zuführen elektrischer, pneumatischer und/oder hydraulischer Energie zu einer relativ zu einer Energiequelle hin- und herbeweglichen Verbrauchereinheit sind Schleppketten allgemein bekannt (Energiekette, Prospekt Seite 21, igus®). Derartige Schleppketten, welche auch als sogenannte Energieketten, insbesondere in Verbindung mit der Handhabungstechnik bekannt sind, können in Abhängigkeit der Anwendung, beispielsweise bei verhältnismässig kurzen Verfahrwegen, freitragend ausgebildet sein oder aber bei verhältnismässig langen Verfahrwegen gleitend in einer Führungsrinne oder auf einem Auflageelement angeordnet werden. Die einzelne Schleppkette umfasst eine Anzahl gelenkig miteinander verbundene Kettenglieder, die zusammen einen in Längsrichtung der Schleppkette orientierten Kabelkanal bilden, welcher zur Aufnahme mindestens einer elektrischen Leitung und/oder zur Aufnahme mindestens eines Schlauches für die pneumatische und/oder hydraulische Energieversorung der Verbrauchereinheit ausgebildet ist.

Bei den bekannten Schleppketten ist jedes einzelne Kettenglied zum Öffnen und Verschliessen des Kabelkanals mit einer quer zur Bewegungsrichtung aufklappbar an der einen Seite des Kettengliedes angelenkten Abdeckplatte versehen, welche Abdeckplatten nach dem Einlegen der Leitungen und/oder Schläuche einzeln und manuell mit der gegenüberliegenden Seite des Kettengliedes einrastend in Eingriff gebracht werden müssen. Bei einer weiteren Variante kann der Kabelkanal durch eine Vielzahl gelenkig miteinander verbundener Abdeckplatten als sogenanntes endloses Abdeckband, welches in Längsrichtung auf die Kettenglieder aufgelegt und an beiden Seiten des einzelnen Kettengliedes durch Druck schnappartig einrastet, verschlossen werden. Bei den bekannten Schleppketten besteht sowohl das Problem der Fertigung als auch der zeitaufwendigen Montage. Weiterhin besteht bei diesen Schleppketten die Möglichkeit, dass die einzelnen Abdeckplatten, insbesondere aber durch die den lichten Raum des Kabelkanals ausfüllenden Leitungen oder Schläuche, bei den relativ hohen Verfahrgeschwindigkeiten aufgesprengt werden und somit ein einwandfreier Betrieb nicht gewährleistet ist.

Aus der GB-A 1,012,432 ist weiterhin eine aus einer Vielzahl von Kettengliedern gebildete und mit einem Kanal zur Aufnahme eines Kabels und/oder eines Schlauches versehene Schleppkette bekannt, bei welcher die einzelnen im Profilquerschnitt etwa, ⊂-förmig ausgebildeten Kettenglieder an der einen quer zur Längsrichtung der Schleppkette orientierten Seite miteinander gelenkig verbunden und an der gegenüberliegenden Seite zum Einlegen des Kabels oder Schlauches jeweils mit einem herausnehmbaren und wieder einsetzbaren Bolzen versehen sind.

Der Erfindung liegt die Aufgabe zugrunde die Herstellung der einzelnen Kettenglieder für eine Schleppkette der genannten Art zu verbessern und diese derart auszubilden, dass sowohl ein rasches Montieren (Einlegen) der Leitungsglieder in den Kabelkanal gewährleistet sowie ein rasches Demontieren (Entfernen) der Leitungsglieder ohne zusätzliche Hilfsmittel möglich ist.

Die Aufgabe wird erfindungsgemäss dadurch gelöst, dass die jeweils mit einer Seitenwand, einer daran angeordneten Abdeckplatte und einer in parallelem Abstand dazu angeordneten Bodenplatte versehenen Kettenglieder jeweils mit den Seitenwänden in bezug auf die Längs- und Bewegungsrichtung der Schleppkette abwechselnd auf der einen oder anderen Seite derselben angeordnet sind, und dass zwischen den etwa quer zur Bewegungsrichtung orientierten und einander zugewandten Seitenkanten der Abdeckplatten jeweils ein spaltförmiger Abstand vorgesehen ist, wobei der spaltförmige Abstand bei der bogenförmigen Umlenkung der Schleppkette durch die Relativbewegung der miteinander verbundenen Kettenglieder hinsichtlich der Spaltbreite vergrössert wird und bei geradlinig gestreckter Schleppkette auf die ursprünglich gewählte Spaltbreite zurückführbar ist.

Ein wesentlicher Vorteil der Erfindung wird in der wirtschaftlichen Montage und Demontage des oder der Leitungsglieder gesehen, weil bei der erfindungsgemässen Schleppkette das zeitraubende Verschliessen der einzelnen Kettenglieder mittels der einzelnen, klappbar angelenkten Abdeckplatten nicht mehr erforderlich ist. Zudem ist ein unerwünschtes Aufspringen der Abdeckelemente während des Betriebes ausgeschlossen.

Das erfindungsgemässe Arbeitsverfahren zum Einlegen mindestens eines Leitungsgliedes in die Schleppkette ist dadurch gekennzeichnet, dass das einzelne Leitungsglied im Bereich des Bogenteils in Bewegungsrichtung abwechselnd von der einen und anderen Seite der Schleppkette eingefädelt und im Kabelkanal abgelegt wird.

In einer weiteren Ausgestaltung wird vorgeschlagen, bei der aus mehreren gelenkig miteinander verbundenen ersten und zweiten Kettengliedern bestehenden Schleppkette, das einzelne Kettenglied mit einem ersten und zweiten Teilstück etwa zweiteilig auszubilden, wobei die als erstes Teilstück ausgebildeten Oberteile bei welcher die ersten Teilstücke in bezug auf die gelenkig miteinander verbundenen und als Unterteil ausgebildeten zweiten Teilstücke relativ und quer zur Längsrichtung der Schleppkette verschiebbar ausgebildet sind.

Im Rahmen der Erfindung liegt es weiterhin, für verhältnismässig lange Schleppketten eine Führungsvorrichtung anzugeben, mittels welcher unter Beibehaltung einer Umlenkung an beliebiger Stelle ein Durchhängen verhindert wird. Die Führungsvorrichtung für die erfindungsgemässe Schleppkette ist dadurch gekennzeichnet, dass die Schleppkette mit in Längsrichtung verteilt zueinander angeordneten und seitlich abstehend ausgebildeten Bolzen zwischen zwei in parallelem Abstand zueinander angeordneten und im Profilquerschnitt etwa ⊂-förmig ausgebildeten sowie gegenläufig zueinander angeordneten Führungsschienen gelagert ist, wobei im unteren Flansch der Führungsschienen mehrere in Längsrichtung im Abstand zueinander angeordnete Ausnehmungen vorgesehen sind, durch welche die zwischen den Führungsschienen angeordnete Schleppkette nach unten auslenkbar ist.

Weitere zweckmässige Ausgestaltungen und Einzelheiten sowie Vorteile der Erfindung ergeben sich aus der folgenden Beschreibung in Verbindung mit der Zeichnung und den einzelnen Patentansprüchen.

Anhand der Zeichnung werden nachstehend einzelne Ausführungsbeispiele der Erfindung beschrieben. Es zeigt:
**Fig.1** eine in schematischer Ansicht dargestellte Vorrichtung mit einer eine Energiequelle mit einer Verbrauchereinheit verbindenden und zur Aufnahme mindestens eines mit Energie beaufschlagbaren Leitungsgliedes ausgebildeten Schleppkette;
**Fig.2** ein Teilstück der in räumlicher Ansicht dargestellten und aus einer Vielzahl gelenkig miteinander verbundenen Kettengliedern bestehenden Schleppkette für die Vorrichtung gemäss Fig.1;
**Fig.3** mehrere in Draufsicht dargestellte Kettenglieder für die Schleppkette gemäss Fig.2;
**Fig.4** ein in grösserem Massstab sowie räumlich dargestelltes Teilstück der durch einen Kreis K gekennzeichneten und als erstes Ausführungsbeispiel dargestellten Kettenglieder für die Schleppkette gemäss Fig.2;
**Fig.5** ein als räumliche Sprengzeichnung sowie als erstes Ausführungsbeispiel dargestelltes erstes und zweites Kettenglied für die Schleppkette gemäss Fig.2;
**Fig.6** ein einzelnes, als zweites Ausführungsbeispiel sowie als räumliche Sprengzeichnung dargestelltes Kettenglied für die Schleppkette gemäss Fig.2;
**Fig.7** ein in grösserem Massstab sowie räumlich dargestelltes Bogenteilstück der Schleppkette mit schematisch dargestelltem Einlegevorgang eines Leitungsgliedes in die Schleppkette gemäss Fig.2;
**Fig.8** eine schematisch dargestellte Auflage- und Führungsvorrichtung für die Schleppkette; und
**Fig.9** die gemäss Pfeilrichtung IX in Fig.7 dargestellte Führungsvorrichtung in Schnittansicht mit schematisch dargestelltem Kettenglied der Schleppkette.

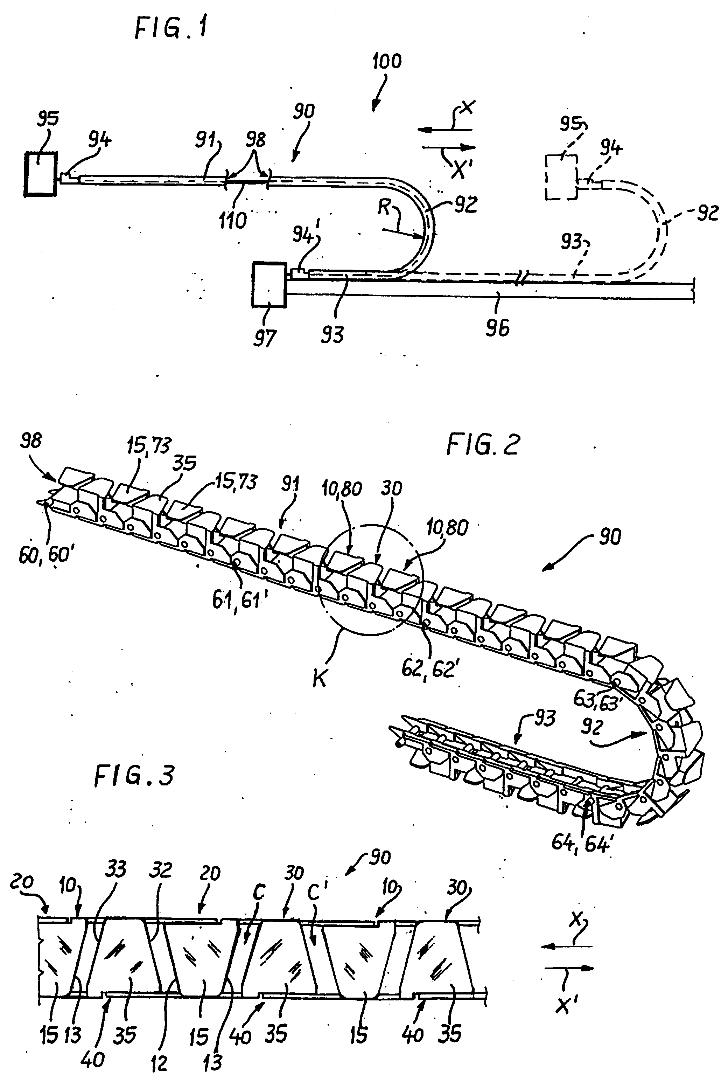

Fig.1 zeigt zur Verdeutlichung der Erfindung eine schematisch dargestellte Vorrichtung 100, welche im wesentlichen eine in der Gesamtheit mit 90 bezeichnete Schleppkette, eine Verbrauchereinheit 95, ein Auflage- und Führungselement 96 für die Schleppkette 90 sowie eine Energiequelle 97 umfasst. Im dargestellten Ausführungs- und Anwendungsbeispiel hat die Schleppkette 90 ein Obertrum 91, ein Bogenteil 92 und ein Untertrum 93. Weiterhin ist die Schleppkette 90 mit einem ersten Anschlussstück 94 an der Verbrauchereinheit 95 und mit einem zweiten Anschlussstück 94' in nicht näher dargestellter Weise entweder im Bereich der Energiequelle 97 an dem Auflage- und Führungselement 96 oder direkt an der Energiequelle angeordnet. Die beiden Anschlussstücke 94 und 94' sind jeweils an den beiden Enden der Schleppkette 90 mit nicht näher dargestellten Mitteln befestigt.

Zur Verdeutlichung des Bewegungsablaufs der auf dem Auflage- und Führungselement 96 im wesentlichen abrollend aufliegenden Schleppkette 90 ist diese in Fig.1 beispielsweise in zwei Stellungen dargestellt. Bei der in Pfeilrichtung X' orientierten Bewegung hat die Schleppkette 90 zusammen mit der Verbrauchereinheit 95, wie durch die unterbrochen (gestrichelt) eingezeichneten Linien dargestellt, etwa die Endstellung erreicht. Bei der in Pfeilrichtung X orientierten Bewegung hat die mit der Verbrauchereinheit 95 wirkverbundene Schleppkette 90, wie durch die voll eingezeichneten Linien dargestellt, die Endstellung noch nicht ganz erreicht.

Die einzelnen, in Fig.1 nicht näher dargestellten Kettenglieder der Schleppkette 90 bilden zusammen einen in Längsrichtung derselben orientierten Kabelkanal 98 zur Aufnahme mindestens eines in Fig.1 teilweise dargestellten Leitungsgliedes 110. Der Kabelkanal 98 ist jedoch vorzugsweise zur Aufnahme mehrerer Leitungsglieder 110 ausgebildet. Die einzelnen in den Kabelkanal 98 einlegbaren und einerseits mit der zugeordneten Energiequelle 97 und andererseits mit der Verbrauchereinheit 95 wirkverbundenen Leitungsglieder 110 können dabei in Form eines Kabels für die elektrische Energieversorgung der Verbrauchereinheit und/oder in Form eines flexiblen Schlauches für die pneumatische und/oder hydraulische Energieversorgung der Verbrauchereinheit 95 ausgebildet sein.

Die Aufnahme und Unterbringung einer aus mehreren elektrischen, pneumatischen und/oder hydraulischen Leitungsgliedern 110 bestehenden Kombination in die Schleppkette 90 ist ebenfalls möglich. Die erfindungsgemässe Schleppkette 90 mit den darin in Längsrichtung angeordneten Leitungsgliedern 110 gewährleistet bei der in bezug auf die feststehende Energiequelle 97 in Längsrichtung gemäss Pfeilrichtung X und X' orientierten Hin- und Herbewegung der Verbrauchereinheit 95 sowie der dabei im Kabelkanal 98 erfolgenden Abrollbewegung der einzelnen Leitungsglieder 110 einen störungsfreien Betrieb. Der störungsfreie Betrieb ist auch bei verhältnismässig langen oder kurzen Bewegungsabläufen zwischen der feststehenden Energiequelle 97 und der Verbrauchereinheit 95 und auch bei relativ hohen Geschwindigkeiten der Hin- und Herbewegungen gewährleistet.

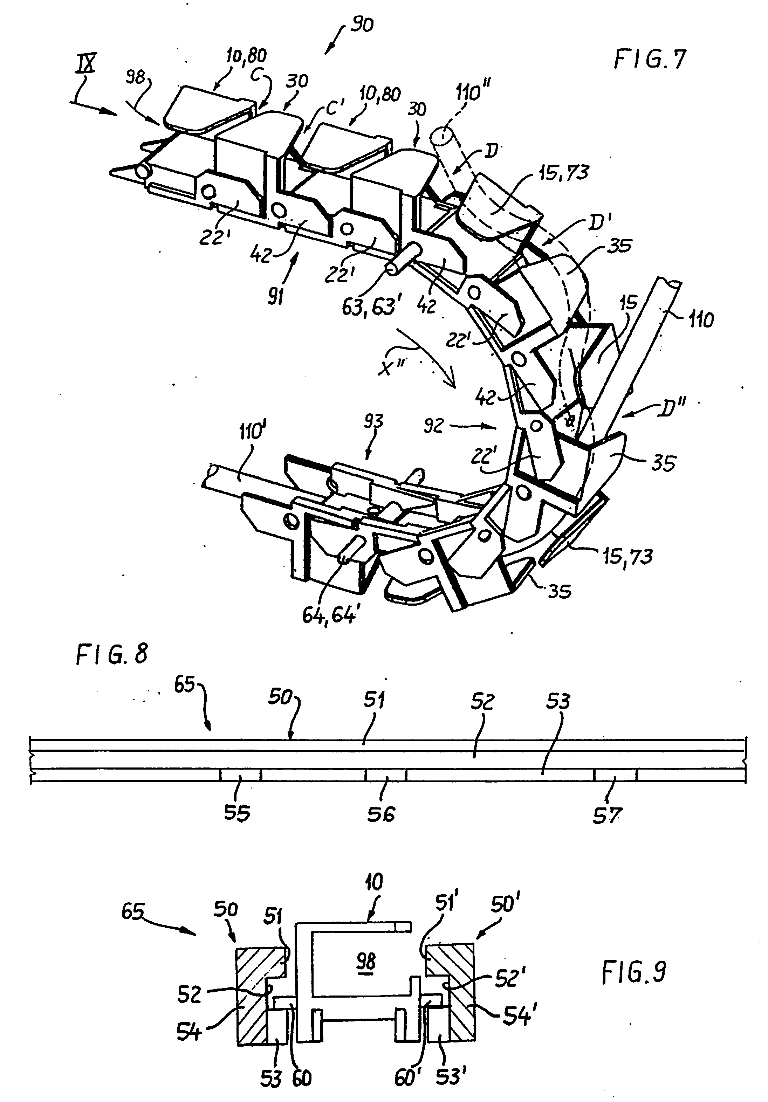

Fig.2 zeigt ein Teilstück der mit dem Kabelkanal 98 versehenen Schleppkette 90 in perspektivischer Ansicht und in grösserem Massstab und man erkennt das aus einer Anzahl gelenkig miteinander verbundener Kettenglieder 10,30 oder 80,30 gebildete Obertrum 91 sowie den Bogen 92 und das daran anschliessende Untertrum 93. Die besondere Ausbildung der einzelnen Kettenglieder 10 und 30 beziehungsweise 80 wird nachstehend in Verbindung mit den Figuren 3 bis 6 im einzelnen beschrieben. Wie in Fig.2 schematisch dargestellt, sind in Längsrichtung der Schleppkette 90 gesehen an einzelnen Kettengliedern 10 und 30 im Abstand zueinander angeordnete Auflageelemente vorgesehen, welche im dargestellten Ausführungsbeispiel als seitlich abstehende Bolzen 60,60';61,61'; 62,62';63,63' und 64,64' ausgebildet sind. Mittels der Bolzen 60,60' bis 64,64' ist die Schleppkette 90 in einer entsprechend ausgebildeten Abstütz- und Führungsvorrichtung 65 linear verschiebbar gelagert. Die Vorrichtung 65 wird in Verbindung mit den Figuren 8 und 9 noch beschrieben.

In Fig.3 ist ein Teilstück der aus den einzelnen gelenkig miteinander verbundenen ersten Kettenglieder 10 und zweiten Kettengliedern 30 gebildeten Schleppkette 90 in Draufsicht dargestellt und man erkennt die in parallelem Abstand C und C' zueinander angeordnete Abdeckplatten 15 und 35 der einzelnen Kettenglieder 10 und 30. Zur Erreichung der spaltförmig ausgebildeten Abstande C und C' sind die Abdeckplatten 15 der ersten Kettenglieder 10 ausgehend von einer in Fig.3 nicht näher dargestellten Seitenwand 20 und die Abdeckplatten 35 der zweiten Kettenglieder 30 ausgehend von einer gegenüberliegenden Seitenwand 40 jeweils quer zur Bewegungsrichtung X,X' konisch verjüngend ausgebildet. Durch diese Formgebung wird erreicht, dass die spaltförmigen Abstände C und C' in Bewegungsrichtung X,X' der Schleppkette 90 gesehen abwechselnd schräg geneigt zueinander angeordnet sind. Die korrespondierend gegenüberliegenden Seitenkanten 12 und 32 beziehungsweise 13 und 33 der Abdeckplatten 15,35 sind in parallelem Abstand zueinander angeordnet. Die durch die besondere Ausbildung und Anordnung der Abdeckplatten 15 und 35 der Kettenglieder 10 und 30 erreichbaren Montagevorteile für die einlegbaren Leitungsglieder 110 werden in Verbindung mit Fig.7 noch im einzelnen beschrieben.

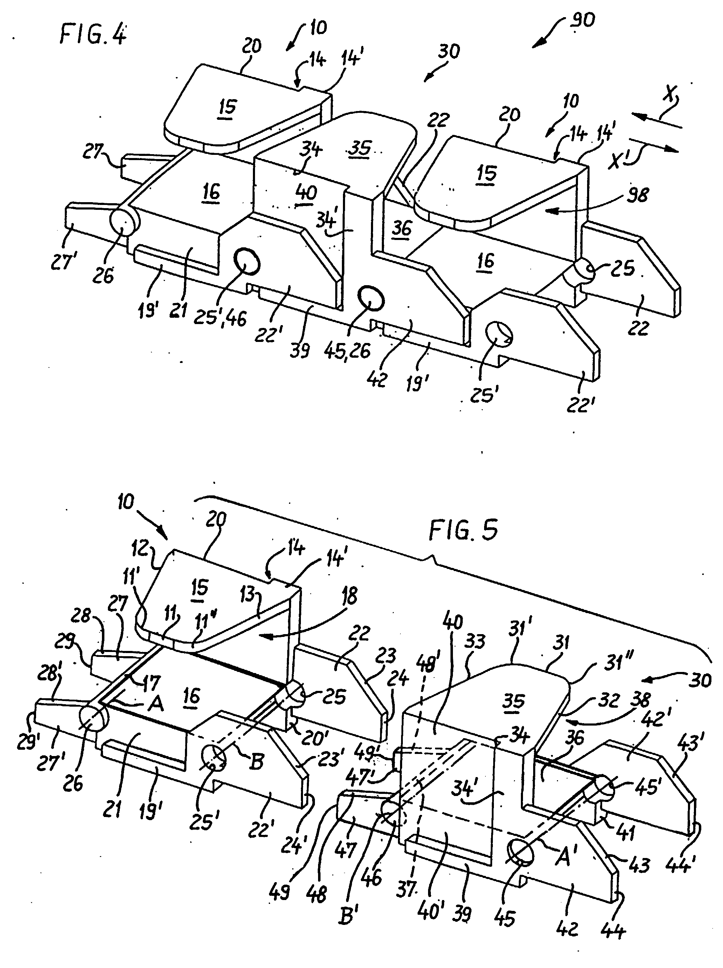

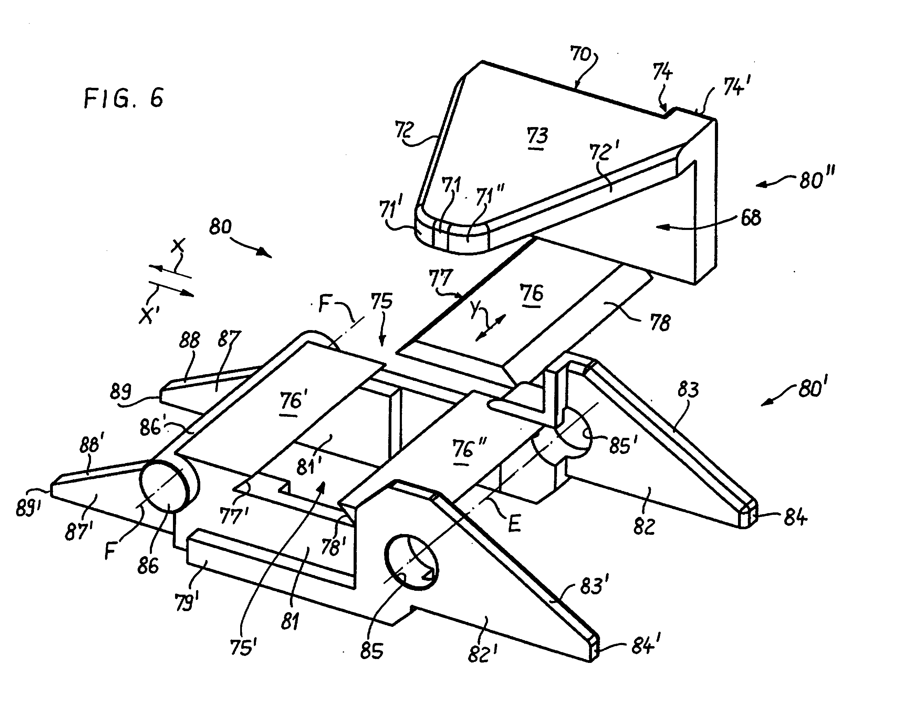

In Fig.4 ist räumlich und in grösserem Massstab ein in Fig.2 durch einen Kreis K bezeichnetes Teilstück der in Bewegungsrichtung X,X' verschiebbaren Schleppkette. 90 dargestellt und man erkennt zwei im Abstand zueinander angeordnete erste Kettenglieder 10 sowie das dazwischen angeordnete und gelenkig mit den beiden ersten Kettengliedern 10 wirkverbundene zweite Kettenglied 30. Die einzelnen Kettenglieder 10 und 30 sind derart ausgebildet und miteinander verbunden, dass diese in dieser Position (Fig.4) den in Längsrichtung orientierten und durch entsprechend gegenüberliegend angeordnete Seitenwände 20,40 und Flanschen 22,42 sowie durch die Abdeckplatten 15,35 und Bodenplatten 16,36 weitgehend geschlossenen Kabelkanal 98 bilden. Die weitere Ausgestaltung der beiden im wesentlichen spiegelbildlich ausgebildeten Kettenglieder 10 und 30 wird nachstehend in Verbindung mit Fig.5 beschrieben.

In Fig.5 ist in räumlicher Ansicht und als Sprengzeichnung das erste Kettenglied 10 sowie das zweite Kettenglied 30 für die Schleppkette 90 dargestellt. Das erste Kettenglied 10 ist im Profilquerschnitt im wesentlichen ⊃-förmig ausgebildet und umfasst die obere Abdeckplatte 15, die in parallelem Abstand dazu angeordnete Bodenplatte 16 sowie die die Abdeckplatte 15 mit der Bodenplatte 16 verbindende erste Seitenwand 20. Die von der Abdeckplatte 15 senkrecht nach unten orientierte erste Seitenwand 20 hat ein in bezug auf die Bodenplatte 16 senkrecht nach unten orientiertes Wandteilstück 20'. An der nicht bezeichneten Aussenseite der Seitenwand 20 und des angeformten Wandteilstücks 20' ist eine abgesetzt ausgebildete Ausnehmung 14 vorgesehen, welche einerseits durch einen senkrechten Steg 14' sowie durch einen orthogonal dazu angeordneten Schenkel 19 begrenzt ist (nicht dargestellt). Der Schenkel 19 ist analog dem dargestellten Schenkel 19' ausgebildet. In parallelem Abstand zu dem teilweise dargestellten Wandteilstück 20' ist an der gegenüberliegenden Seite eine an der Bodenplatte 16 anschliessende und senkrecht nach unten orientierte zweite Seitenwand 21 angeordnet. Die auf der einen Seite durch die Seitenwand 20 miteinander verbundene Abdeckplatte 15 und Bodenplatte 16 sind derart im Abstand zueinander angeordnet, dass zwischen den Teilen 15 und 16 eine Tasche 18 vorgesehen ist. Die an der Seitenwand 20 angeformte Abdeckplatte 15 hat zwei verjüngend ausgebildete Seitenkanten 12 und 13, welche durch eine orthogonal dazu orientierte Stirnkante 11 begrenzt sind. Die Stirnkante 11 ist vorzugsweise mit Abrundungen 11' und 11" versehen.

An dem einen Ende des ersten Kettengliedes 10 sind im wesentlichen in Verlängerung der beiden parallel beabstandeten Seitenwände 20,20' und 21 jeweils zwei ebenfalls in parallelem Abstand zueinander angeordnete erste Flanschen 22,22' angeordnet, wobei der eine Flansch 22' einen an der zweiten Seitenwand 21 anliegend angeformten Schenkel 19' aufweist. Die beiden ersten Flanschen 22,22' sind an dem einen Ende jeweils mit einer abgeschrägten Stegfläche 23,23' sowie einer senkrecht dazu angeordneten Stirnkante 24,24' versehen. Die beiden ersten Flanschen 22,22' werden jeweils von einer Bohrung 25 beziehungsweise 25' durchdrungen. In den beiden korrespondierend zueinander angeordneten Bohrungen 25 und 25' des ersten Kettengliedes 10 wird das zweite mit einem Gelenkzapfen 46 versehene Kettenglied 30 gelagert, wobei die Bohrungen 25,25' und der Gelenkzapfen 46 in zusammengebautem eine zweite Schwenkachse B,B' bilden (Fig.4).

An dem anderen Ende des ersten Kettengliedes 10 sind zwei in parallelem Abstand zueinander angeordnete zweite Flanschen 27,27' angeordnet. Die zweiten Flanschen 27,27' sind an dem einen Ende jeweils mit einer abgeschrägten Stegfläche 28,28' sowie mit einer senkrecht dazu orientierten Stirnkante 29,29' versehen. Weiterhin erkennt man in Fig.5 einen sich beispielsweise über die gesamte Breite der Bodenplatte 16 erstreckenden Gelenkzapfen 26, welcher in axialer Verlängerung an beiden Seiten mit einem in bezug auf die Seitenwände 21 und 20 abstehenden, nicht näher bezeichneten Endstück versehen ist. Der mit den beiden seitlich abstehenden Endstücken versehene Gelenkzapfen 26 bildet eine erste Schwenkachse A für das nächste mit entsprechend angeordneten Bohrungen 45 und 45' versehene zweite Kettenglied 30 (Fig.4). Der Gelenkzapfen 26 ist an der Bodenplatte 16 angeformt, wobei der Übergang von der ebenen Bodenplatte 16 zu dem Gelenkzapfen 26 mit einer sich über die gesamte, quer zur Bewegungsrichtung orientierten Breite der Bodenplatte 16 erstreckenden Gleitkante 17 versehen ist. Die in Bewegungsrichtung angeschrägte Gleitkante 17 dient insbesondere in abgebogenem Zustand der Schleppkette 90 (Fig.2) als Gleitfläche für das einzelne oder für die einzelnen in Form eines elektrischen Kabels und/oder eines Schlauches ausgebildeten und im Kabelkanal 98 angeordneten Leitungsglieder 110 (Fig.1).

Das ebenfalls in Fig.5 dargestellte zweite Kettenglied 30 ist im wesentlichen analog dem vorstehend beschriebenen Kettenglied 10 im Profilquerschnitt ⊂-förmig ausgebildet. Das zweite Kettenglied 30 umfasst die obere Abdeckplatte 35, die in parallelem Abstand dazu angeordnete Bodenplatte 36 sowie die die Abdeckplatte 35 mit der Bodenplatte 36 verbindende erste Seitenwand 40. Zwischen der Abdeck- und Bodenplatte 35 und 36 ist eine Tasche 38 vorgesehen. Die von der Abdeckplatte 35 senkrecht nach unten zur Bodenplatte 36 orientierte erste Seitenwand 40 hat ein in bezug auf die Bodenplatte 36 senkrecht nach unten orientiertes Wandteilstück 40'. An der nicht bezeichneten Aussenseite der Seitenwand 40 und des Wandteilstückes 40' ist eine abgesetzt ausgebildete Ausnehmung 34 vorgesehen, welche durch einen senkrechten Steg 34' und einen orthogonal dazu angeordneten Schenkel 39 begrenzt ist. In parallelem Abstand zu dem Wandteilstück 40' ist an der gegenüberliegenden Seite eine an der Bodenplatte 36 anschliessende und senkrecht nach unten orientierte zweite Seitenwand 41 angeordnet, welche in Fig.5 nur teilweise sichtbar ist. Ausgehend von der Seitenwand 40 ist die Abdeckplatte 35 mit zwei verjüngend ausgebildeten Seitenkanten 32 und 33 versehen, welche durch eine parallel zur Seitenwand 40 orientierte Stirnseite 31 begrenzt sind. Die Stirnseite 31 ist vorzugsweise analog dem ersten Kettenglied 10 mit Abrundungen 31' und 31" versehen.

An dem einen Ende des zweiten Kettengliedes 30 sind im wesentlichen in Verlängerung der parallel beabstandeten Seitenwände 40,40' und 41 zwei in parallelem Abstand zueinander angeordnete erste Flanschen 42,42' angeordnet, wobei der eine Flansch 42 den sich in Längsrichtung des Kettengliedes 30 erstreckenden Schenkel 39 aufweist. Der Schenkel 39 des zweiten Kettengliedes 30 entspricht etwa dem am ersten Kettenglied 10 angeordneten, nicht näher dargestellten Schenkel 19. Die beiden ersten Flanschen 42,42' sind an dem einen Ende jeweils mit einer abgeschrägten Stegfläche 43,43' sowie einer senkrecht dazu angeordneten Stirnkante 44,44' versehen. Die beiden ersten Flanschen 42,42' werden jeweils von einer Bohrung 45 beziehungsweise 45' durchdrungen. In den beiden korrespondierend zueinander angeordneten Bohrungen 45,45' ist das erste Kettenglied 10 (Fig.4) mit dem Gelenkzapfen 26 einrastend gelagert.

An dem anderen Ende des zweiten Kettengliedes 30 sind ebenfalls zwei in parallelem Abstand zueinander angeordnete Flanschen 47,47' angeordnet. Die beiden zweiten Flanschen 47,47' sind an dem einen Ende jeweils mit einer abgeschrägten Stegfläche 48,48' sowie mit einer senkrecht dazu orientierten Stirnkante 49,49' versehen. Weiterhin erkennt man in Fig.5 einen teilweise dargestellten, sich über die gesamte Breite des Kettengliedes 30 erstreckenden Gelenkzapfen 46, welcher an beiden Seiten ein in bezug auf die Seitenwände 41 und 40 abstehendes, nicht näher bezeichnetes Endstück aufweist. Der Gelenkzapfen 46 bildet eine Schwenkachse B' für das nächste daran gelagerte und mit entsprechend angeordneten Bohrungen 25,25' versehene Kettenglied 10. Der Gelenkzapfen 46 ist an der Bodenplatte 36 angeformt, wobei der Übergang von der ebenen Bodenplatte 36 zu dem Gelenkzapfen 46 mit einer sich über die gesamte, quer zur Bewegungsrichtung orientierten Breite der Bodenplatte 36 erstreckenden Gleitkante 37 versehen ist. Die in Bewegungsrichtung angeschrägt ausgebildete Gleitkante 37 dient insbesondere in abgebogenem Zustand der Schleppkette 90 (Fig.2) als Gleitfläche für das einzelne oder für die einzelnen in Form eines elektrischen Kabels und/oder eines Schlauches ausgebildeten und im Kabelkanal 98 angeordneten Leitungsglieder 110 (Fig.1).

An dieser Stelle wird darauf hingewiesen, dass die beiden Kettenglieder 10 und 30 im wesentlichen analog und spiegelbildlich ausgebildet sind. Die bei dem ersten Kettenglied 10 in Fig.5 nicht näher dargestellte Seitenwand 20,20' mit der Ausnehmung 14, dem Steg 14' und dem Schenkel 19 ist analog der in Fig.5 in Ansicht dargestellten Seitenwand 40,40' mit der Ausnehmung 34, dem Steg 34' und dem Schenkel 39 des zweiten Kettengliedes 30 ausgebildet. Die bei dem zweiten Kettenglied 30 in Fig.5 nicht näher dargestellte Seitenwand 41 mit dem Schenkel 39' ist analog der in Fig.5 in Ansicht dargestellten Seitenwand 21 mit dem Schenkel 19' des ersten Kettengliedes 10 ausgebildet.

Wie in Fig.4 sowie in Fig.5 dargestellt, sind die ersten Flanschen 22,22' des ersten Kettengliedes 10 und die zweiten Flanschen 47,47' des zweiten Kettengliedes 30 derart angeordnet und quer zur Bewegungsrichtung X,X' zueinander beabstandet, dass in zusammengebautem Zustand die zweiten, inneren Flanschen 47,47' des zweiten Kettengliedes 30 innenseitig zwischen den beiden beabstandeten Seitenwänden 20' und 21 angeordnet sind. Die beiden ersten, äusseren Flanschen 22,22' des ersten Kettengliedes 10 sind dabei aussenseitig an den Seitenwänden 40,40 und 41 angeordnet. In dieser Stellung ist der Gelenkzapfen 46 des zweiten Kettengliedes 30 in den Bohrungen 25,25' des ersten Kettengliedes 10 einrastend gelagert.

Fig.6 zeigt als zweites Ausführungbeispiel ein in der Gesamtheit mit 80 bezeichnetes und als räumliche Sprengzeichnung sowie in grösserem Massstab dargestelltes Kettenglied. Abweichend von dem vorstehend im einzelnen beschriebenen Kettenglied 10 gemäss Fig.5 ist das Kettenglied 80 zweiteilig ausgebildet und umfasst ein Unterteil 80' und ein relativ dazu, d.h., quer zur Bewegungsrichtung der Schleppkette verschiebbares Oberteil 80".

Das im Profilquerschnitt etwa ⊃-förmig ausgebildete Oberteil 80" hat eine obere Abdeckplatte 73, ein in parallelem Abstand dazu angeordnetes Schiebestück 76 sowie eine die Teile 73 und 76 miteinander verbindende Seitenwand 70. Die von der Abdeckplatte 73 senkrecht nach unten orientierte Seitenwand 70 hat eine abgesetzt ausgebildete Ausnehmung 74, welche durch einen Steg 74' begrenzt ist. Die an der Seitenwand 70 angeformte Abdeckplatte 73 hat zwei verjüngend ausgebildete Seitenkanten 72,72', welche am vorderen Ende durch eine mit Abrundungen 71',71" versehene Stirnkante 71 begrenzt sind. Im dargestellten Ausführungsbeispiel sind die quer zur Bewegungsrichtung X,X' der Schleppkette (nicht dargestellt) orientierten Seitenkanten 77 und 78 des Schiebestücks 76 als abgeschrägte Flanken ausgebildet (Fig.6).

Das Unterteil 80' hat eine Bodenplatte 75, welche durch eine quer zur Bewegungsrichtung X,X' orientierte Ausnehmung 75' in zwei Teilstücke 76' und 76' unterteilt ist. An den beiden Seiten der Ausnehmung 75' ist jeweils eine abgeschrägt ausgebildete Flanke 77' und 78' vorgesehen. An der Bodenplatte 75 sind weiterhin zwei im Abstand zueinander angeordnete Seitenwände 81 und 81' angeformt. An dem einen Ende des Unterteils 80' sind in Verlängerung der beiden parallel beabstandeten Seitenwände 81,81' jeweils zwei ebenfalls in parallelem Abstand zueinander angeordnete erste Flanschen 82,82' angeordnet, wobei der eine Flansch 82' einen an der Seitenwand 81 anliegend angeformten Schenkel 79' aufweist. An dem Flansch 82 ist ebenfalls ein nicht näher dargestellter Schenkel (analog dem Schenkel 79') angeformt. Die beiden ersten Flanschen 82,82' sind an dem einen Ende jeweils mit einer abgeschrägten Stegfläche 83,83' sowie einer senkrecht dazu angeordneten Stirnkante 84,84' versehen. Die beiden ersten Flanschen 82,82' werden jeweils von einer Bohrung 85 beziehungsweise 85' durchdrungen. In den beiden korrespondierend zueinander angeordneten Bohrungen 85 und 85' des Unterteils 80' ist das mit einem Gelenkzapfen versehene nächste Kettenglied (nicht dargestellt) gelagert. Die Bohrungen 85,85' bilden mit dem Gelenkzapfen des nächsten nicht dargestellten Kettengliedes zusammen eine Schwenkachse E.

An dem anderen Ende des Unterteils 80' sind zwei in parallelem Abstand zueinander angeordnete Flanschen 87,87' angeordnet. Die Flanschen 87,87' sind an dem einen Ende jeweils mit einer abgeschrägten Stegfläche 88,88' sowie mit einer senkrecht dazu orientierten Stirnkante 89,89' versehen. Weiterhin erkennt man in Fig.6 einen sich beispielsweise über die gesamte Breite der Bodenplatte 75 erstreckenden Gelenkzapfen 86, welcher in axialer Verlängerung an beiden Seiten mit einem in bezug auf die Seitenwände 81 und 81' abstehenden, nicht näher bezeichneten Endstück versehen ist. Der mit den beiden seitlich abstehenden Endstücken versehene Gelenkzapfen 86 bildet eine Schwenkachse F für das nächste mit entsprechend angeordneten Bohrungen versehene Kettenglied. Der Gelenkzapfen 86 ist an der Bodenplatte 75 angeformt, wobei der Übergang von der ebenen Bodenplatte 75 zu dem Gelenkzapfen 86 mit einer sich über die gesamte, quer zur Transportrichtung orientierten Breite der Bodenplatte 75 erstreckenden Gleitkante 86' versehen ist.

Bei dem in Fig.6 dargestellten Ausführungsbeispiel ist das Oberteil 80" mit dem Schiebestück 76 relativ zu dem mit der Ausnehmung 75' versehenen Unterteil 80' verschiebbar. Die beiden Teile 80' und 80" können durch eine sogenannte "Schwalbenschwanz-Führung" derart miteinander verbunden werden, dass das in die Ausnehmung 75' einschiebbare Schiebestück 76 des Oberteils 80" mit den beiden Teilstücken 76',76" in eingeschobenem Zustand (nicht dargestellt) die ebene Bodenplatte 75 bildet. An dem Schiebestück 76 kann zudem ein Anschlag (nicht dargestellt) vorgesehen werden, so dass das Oberteil 80" nur bis zum Anschlag aus der Ausnehmung 75' des Unterteils 80' herausgezogen werden kann. Weiterhin kann an dem Schiebestück 76 des Oberteils 80" ein nicht dargestelltes Rastelement angeordnet sein, mittels welchem das Oberteil 80" in zusammengeschobenem Zustand gegen unbeabsichtigtes Herausziehen an dem Unterteil 80' gehalten ist.

Die Verbindung zwischen den beiden relativ zueinander verschiebbaren Teilen 80' und 80" kann auch über eine an sich bekannte Nut-Federverbindung oder dergleichen erfolgen. Wesentlich hierbei ist es, dass das Oberteil 80" mit dem Schiebestück 76 relativ zu dem mit der Ausnehmung 75' versehenen Unterteil 80' verschiebbar ist und in zusammengeschobenem Zustand der beiden Teile 80',80" eine ebene Bodenplatte 75 gebildet ist.

An dieser Stelle wird darauf hingewiesen, dass bei einer aus den Kettengliedern 80 und spiegelbildlich ausgebildeten Kettenglieder (nicht dargestellt) bestehenden Schleppkette durch die quer zur Bewegungsrichtung der Schleppkette relativ zu den Unterteilen 80' verschiebbaren Oberteile 80" eine verhältnismässig grosse Öffnung zum Einlegen eines relativ breiten Leitungsgliedes möglich ist. Das seitliche Herausziehen der Oberteile 80" erfolgt dabei in gestreckter Lage der Schleppkette.

Es besteht weiterhin die Möglichkeit, dass in gestreckter Lage der abwechselnd aus miteinander gelenkig verbundenen Kettengliedern 80 und 30 sowie 80 gebildeten Schleppkette 90 (Fig.2) nur die einen Kettenglieder 80 mit einem herausziehbaren Oberteil 80" ausgebildet sind, so dass das Leitungsglied (nicht dargestellt) etwa analog dem Beispiel gemäss Fig.7 abwechselnd von der einen und anderen Seite eingefädelt im Kabelkanal abgelegt wird.

Fig.7 zeigt in grösserem Massstab sowie in räumlicher Darstellung das Bogenstück 92 sowie jeweils ein Teilstück des Obertrums 91 und des Untertrums 93 der Schleppkette 90 und man erkennt die im Bereich des Obertrums 91 mit dem spaltförmigen Abstand C und C' zueinander angeordneten ersten und zweiten Kettenglieder 10 und 30. Bei der in Pfeilrichtung X" etwa kreisbogenförmigen Bewegung werden die einzelnen Kettenglieder 10,30 derart zueinander verschwenkt, dass dabei zwischen den hier nicht näher bezeichneten Seitenkanten der einzelnen Kettenglieder 10,30 sich die spaltförmigen Abstände C und C' in spaltförmige Abstände D und D' sowie D" vergrössern. Im Bogenbereich sind die spaltförmigen Abstände D" am grössten, so dass hier das Leitungsglied 110, wie in Fig.7 schematisch dargestellt, abwechselnd von der einen und anderen Seite der Schleppkette 90 eingefädelt und in dem Kabelkanal 98 abgelegt werden kann. Das Einfädeln beziehungsweise Einlegen des oder der Leitungsglieder 110 erfolgt vorzugsweise bei gleichzeitiger, abrollender Bewegung der Schleppkette 90 in Pfeilrichtung X".

Die etwa im Bereich des Bogenteils 92 erfolgende Relativbewegung (Fig.7) der einzelnen Kettenglieder 10 und 30 zueinander ist im wesentlichen durch die abgeschrägten und mit der nicht bezeichneten unteren Fläche der Bodenplatte 16 formschlüssig anliegend in Eingriff bringbaren Stegflächen 48,48' der beiden Flanschen 47,47' begrenzt (nicht dargestellt). Durch die gewählte Schräge der beiden Stegflächen 48 und 48' kann in Abhängigkeit der Leitungsglieder 110 der in Fig.1 dargestellte Biegeradius R des Bogenteils 92 definiert werden. Die beiden äusseren Flanschen 22 und 22' des ersten Kettengliedes sind in der einen Bewegungsrichtung durch die zugeordneten Schenkel 39 und 39' des zweiten Kettengliedes 30 begrenzt, derart, dass ein Abknicken der einzelnen Kettenglieder 10 und 30 zueinander verhindert wird und die Schleppkette 90 zwangsläufig nur in Form des Bogenteils 92 umgelenkt werden kann.

Die einzelnen Elemente der beiden Kettenglieder 10 und 30 gemäss Fig.4 bis Fig.5 bilden zusammen jeweils eine Baueinheit, wobei die Kettenglieder 10 und 30 beispielsweise aus geeignetem Kunststoff im Spritzverfahren hergestellt sind. Das im wesentlichen zweiteilig ausgebildete Kettenglied 80 gemäss Fig.6 ist ebenfalls aus geeignetem Kunststoff im Spritzverfahren hergestellt.

Fig.8 zeigt eine in Seitenansicht dargestellte Führungsschiene 50 für eine in Fig.9 in Schnittansicht dargestellte und zur Lagerung der Schleppkette 90 ausgebildete Abstütz- und Führungsvorrichtung 65. Die Abstütz- und Führungsvorrichtung 65 umfasst zwei mit der offenen Seite gegeneinander sowie in parallelem Abstand zueinander angeordnete und im Profilquerschnitt im wesentlichen ⊂-förmig ausgebildete Führungsschienen 50 und 50'. Die Führungsschienen 50 und 50' haben jeweils zwei in vertikaler Richtung durch eine in Längsrichtung orientierte Führungsnut 52,52' beabstandete Flanschen 51,51' und 53,53' sowie einen diese miteinander verbindenden Steg 54, 54'. In dem unteren Flansch 53,53' der beiden korrespondierend zueinander angeordneten Führungsschienen 50 und 50' sind beispielsweise in Abhängigkeit der Länge eine Anzahl in Längsrichtung beabstandete Ausnehmungen 55, 56 und 57 vorgesehen. Die Ausnehmungen 55, 56 und 57 sind derart ausgebildet, dass die an den einzelnen Kettengliedern 10,30 der Schleppkette 90 angeordneten und auf dem unteren Flansch 53 und 53' aufliegenden Bolzen 60 und 60', wie beispielsweise in Fig.9 dargestellt, an beliebiger Stelle ausser Eingriff der beiden Führungsschienen 50 und 50' gebracht werden können. Durch diese Massnahme kann die in der Abstütz- und Führungsvorrichtung 65 geführte Schleppkette 90 an beliebiger Stelle durch eine kreisbogenförmige Auslenkung ausser Eingriff der beiden Führungsschienen 50 und 50' gebracht werden.

An dieser Stelle wird darauf hingewiesen, dass die in Längsrichtung der Schleppkette 90 in Abständen an den Kettengliedern 10 und 30 angeordneten Bolzen 60,60' bis 64,64' (Fig.2) sowie die in Längsrichtung orientierten Abstände der an den beiden Führungsschienen 50 und 50' der Abstütz- und Führungsvorrichtung 65 angeordneten Ausnehmungen 55,56 und 57 derart bemessen und zueinander angeordnet sind, dass bei einer Auslenkung eines beliebigen Bolzenpaares 60,60' bis 64,64' mindestens ein nachgeordnetes Bolzenpaar noch auf den beiden Flanschen 53 und 53' der Führungsschienen 50 und 50' abgestützt und in den Führungsnuten 52,52' geführt ist.

Bei einem nicht näher dargestellten Ausführungsbeispiel werden die Leitungsglieder 110 einzeln oder durch entsprechende Mittel gebündelt in die Schleppkette 90 eingefädelt oder abgelegt und in Längsrichtung derselben auf mindestens einer der Bodenplatten 16 und 36 der Kettenglieder 10 und 30 befestigt. Einzelne Bodenplatten sind für diesen Arbeitsvorgang mit entsprechend ausgebildeten nicht dargestellten Ausnehmungen oder Öffnungen versehen. Nach dem Einfädeln und Einlegen der Leitungsglieder 110 werden diese in Längsrichtung gestrafft, so dass diese in dem Kabelkanal 98 der Schleppkette 90 eine im wesentlichen gerade Linie bilden und etwa parallel zueinander angeordnet sind.

## Patentansprüche

1. Schleppkette mit mehreren gelenkig miteinander verbundenen ersten und zweiten Kettengliedern, welche im Profilquerschnitt etwa ⊂-förmig ausgebildet sind und zusammen einen in Längsrichtung der Schleppkette (90) orientierten Kabelkanal (98) zur Aufnahme mindestens eines Leitungsgliedes (110) bilden, mittels welchem einer relativ zu einer Energiequelle (97) linear hin- und herbeweglichen Verbrauchereinheit (95) Energie zuführbar ist, **dadurch gekennzeichnet,** dass die jeweils mit einer Seitenwand (20;40;70), einer daran angeordneten Abdeckplatte (15;35;73) und einer in parallelem Abstand dazu angeordneten Bodenplatte (16;36;75) versehenen Kettenglieder (10;30;80) jeweils mit den Seitenwänden (20;40;70) in bezug auf die Längs- und Bewegungsrichtung der Schleppkette (90) abwechselnd auf der einen oder anderen Seite derselben angeordnet sind, und dass zwischen den etwa quer zur Bewegungsrichtung orientierten und einander zugewandten Seitenkanten (12,32;13,33) der Abdeckplatten (15;35;73) jeweils ein spaltförmiger Abstand (C;C') vorgesehen ist, wobei die spaltförmigen Abstände (C;C') bei der bogenförmigen Umlenkung der Schleppkette (90) durch die Relativbewegung der miteinander verbundenen Kettenglieder (10;30;80) hinsichtlich der Spaltbreite vergrössert werden und bei geradlinig gestreckter Schleppkette (90) auf die ursprünglich gewählte Spaltbreite zurückführbar sind.

2. Schleppkette nach Anspruch 1, **dadurch gekennzeichnet,** dass die ersten und zweiten Kettenglieder (10;30) einteilig und spiegelbildlich zueinander ausgebildet sind, wobei die in Bewegungsrichtung (X,X') orientierten und einen in Längsrichtung der Schleppkette (90) orientierten Kabelkanal (98) bildenden Seitenwände (20;40) sowie seitlich daran angeordnete erste Flanschen (22,22';42,42') auf der einen und anderen Seite der Kettenglieder (10;30) angeordnet sind.

3. Schleppkette nach Anspruch 1, **dadurch gekennzeichnet,** dass das einzelne Kettenglied (80) aus einem Unterteil (80') und einem Oberteil (80") zweiteilig ausgebildet ist, wobei die einzelnen Unterteile (80') gelenkig miteinander verbunden und die einzelnen Oberteile (80") quer zur Bewegungsrichtung (X,X') der Schleppkette (90) relativ zu dem jeweiligen Unterteil (80') verschiebbar ausgebildet sind.

4. Schleppkette nach Anspruch 3, **dadurch gekennzeichnet,** dass das Unterteil (80') eine mit einer quer zur Bewegungsrichtung (X,X') der Schleppkette (90) orientierten Ausnehmung (75') versehene Bodenplatte (75) und das Oberteil (80") ein angeformtes Schiebestück (76) aufweist, welches mit seitlichen, geneigt ausgebildeten ersten Flanken (77,78) in der mit korrespondierend geneigt ausgebildeten zweiten Flanken (77', 78') versehenen Ausnehmung (75') des Unterteils (80') verschiebbar geführt ist.

5. Schleppkette nach den Ansprüchen 2 bis 4, **dadurch gekennzeichnet,** dass an den Seitenwänden (20,21;40,41;81,81') der Kettenglieder (10;30;80) in Bewegungsrichtung (X,X') der Schleppkette (90) orientierte und mit den ersten Flanschen (22,22';42,42';82,82') zur Verhinderung des Abknickens der einzelnen Kettenglieder formschlüssig in Eingriff bringbare Schenkel (19,19';39,39') angeordnet sind.

6. Schleppkette nach Anspruch 1, **dadurch gekennzeichnet,** dass die etwa quer zur Bewegungsrichtung (X,X') orientierten Seitenkanten (12,13;32,33;72,72') der Abdeckplatten (15;35; 73) in Richtung einer der Seitenwände (20;40;70) gegenüberliegenden Stirnkante (11;31;71) jeweils konisch verjüngend ausgebildet und derart zueinander angeordnet sind, dass die zwischen den Abdeckplatten (15;35;70) vorgesehenen und spaltförmig ausgebildeten Abstände (C;C') in Bewegungsrichtung (X,X') gesehen abwechselnd schräg geneigt zueinander angeordnet sind.

7. Schleppkette nach Anspruch 1, **dadurch gekennzeichnet,** dass jedes einzelne Kettenglied (10;30;80) an beiden in Bewegungsrichtung (X,X') orientierten Enden mit zwei in parallelem Abstand zueinander angeordneten ersten und zweiten Flanschen (22,22' und 27,27';42,42' und 47,47';82,82' und 87,87') versehen ist, wobei die Flanschen derart zueinander angeordnet sind, dass die zweiten Flanschen des zweiten Kettengliedes zwischen den ersten Flanschen des ersten Kettengliedes angeordnet und dieses relativ zu dem zweiten Kettenglied um eine quer zur Bewegungsrichtung (X,X') orientierte Achse schwenkbar gelagert ist.

8. Schleppkette nach den Ansprüchen 1 und 7, **dadurch gekennzeichnet,** dass die einzelnen Kettenglieder (10;30;80) mittels seitlich an der Bodenplatte (16;36;75) abstehend angeformter Gelenkzapfen (26;46;86) in korrespondierend zueinander angeordneten Bohrungen (25,25';45,45') der ersten Flanschen (22,22';42,42') relativ zueinander schwenkbar gelagert sind.

9. Schleppkette nach Anspruch 6, **dadurch gekennzeichnet,** dass die zweiten Flanschen (27,27';47,47') jeweils mit einer bei der kreisbogenförmigen Umlenkung der Kettenglieder (10; 30) mit der Unterkante der zugeordneten Bodenplatte (16;36) formschlüssig in Eingriff bringbaren, abgeschrägten Stegfläche (28,28';48, 48') versehen sind.

10. Schleppkette nach Anspruch 9, **dadurch gekennzeichnet,** dass die Schräge der Stegflächen (28,28';48,48';88,88') in Abhängigkeit von dem Biegeradius (R) des Bogenteils (92) der Schleppkette (90) und der Biegeradius (R) in Abhängigkeit des oder der in den Kabelkanal (98) einzulegenden Leitungsgliedes oder Leitungsglieder (110) dimensioniert ist.

11. Schleppkette nach Anspruch 1, **dadurch gekennzeichnet,** dass die Schleppkette (90) mit einer beliebigen Anzahl in Längsrichtung im Abstand verteilt und seitlich abstehend an den einzelnen Kettengliedern (10;30;80) angeordneter Bolzenpaare (60,60' bis 64,64') versehen ist.

12. Schleppkette nach Anspruch 11, **dadurch gekennzeichnet,** dass die Kettenglieder (10;30;80) mittels der Bolzenpaare (60,60' bis 64,64') zwischen zwei in parallelem Abstand zueinander angeordneten Führungsschienen (50,50') gelagert sind wobei die Führungsschienen (50,50') an zwei einander zugewandten unteren Flanschen (53,53') eine Anzahl in Längsrichtung im Abstand zueinander angeordnete Ausnehmungen (55,55',56, 56',57,57') aufweisen, durch welche beim Umlenken der Schleppkette (90) das der betreffenden Ausnehmung zugeordnete Bolzenpaar (60,60' bis 64,64') hindurchführbar und ausser Eingriff der beiden Flanschen (53,53') bringbar ist.

13. Schleppkette nach den Ansprüchen 11 und 12, **dadurch gekennzeichnet,** dass die an den Kettengliedern (10;30;80) in Abständen zueinander angeordneten Bolzenpaare (60,60' bis 64,64') sowie die in Abständen an den unteren Flanschen (53,53') der Führungsschienen (50,50') angeordneten Ausnehmungen (55,55',56,56',57,57') derart zueinander angeordnet sind, dass bei einer Auslenkung der Schleppkette (90) im Bereich eines beliebig gewählten Bolzenpaares (60,60' bis 64,64') mindestens noch ein nachfolgend angeordnetes Bolzenpaar auf den unteren Flanschen (53,53') abgestützt und zwischen den Führungsschienen (50,50') geführt ist.

14. Arbeitsverfahren zum Einlegen mindestens eines Leitungsgliedes in die Schleppkette nach Anspruch 1, **dadurch gekennzeichnet,** dass das einzelne Leitungsglied (110) im Bereich des Bogenteils (92) in Bewegungsrichtung (X,X') abwechselnd von der einen und anderen Seite der Schleppkette (90) eingefädelt und im Kabelkanal (98) abgelegt wird.

15. Arbeitsverfahren nach Anspruch 14, **dadurch gekennzeichnet,** dass das Einfädeln und Ablegen des einzelnen Leitungsgliedes (110) bei gleichzeitig abrollender Bewegung im Bereich des Bogenteils (92) der Schleppkette (90) durchgeführt wird.

16. Arbeitsverfahren nach den Ansprüchen 13 bis 15, **dadurch gekennzeichnet,** dass die Leitungsglieder (110) einzeln oder durch entsprechende Mittel gebündelt eingefädelt und in Längsrichtung der Schleppkette (90) auf mindestens einer der Bodenplatten (16;36;75) der Kettenglieder (10;30;80) abgelegt bzw. befestigt werden.

## Claims

1. Drag chain having a plurality of first and second chain links which are connected to one another in an articulated manner, are of approximately ⊂-shaped design in profile cross section and together form a cable duct (98), which is orientated in the longitudinal direction of the drag chain (90), for holding at least one line (110) by means of which energy can be fed to a consumer unit (95) which can be moved linearly to and fro relative to an energy source (97), characterized in that the chain links (10;30;80), which are each provided with a side wall (20;40;70), a covering plate (15;35;73) arranged thereon and a base plate (16;36;75) arranged at a parallel distance from said covering plate, are in each case arranged with the side walls (20;40;70) alternately on the one or other side of the drag chain (90), with respect to the longitudinal and movement direction of said drag chain, and in that between the side edges (12,32;13,33) of the covering plates (15;35;73), which side edges are orientated approximately transversely to the movement direction and face one another, there is in each case provided a clearance (C;C') which is in the form of a gap, the clearances (C;C') which are in the form of a gap are increased in size with regard to the gap width during the curved deflection of the drag chain (90) by the relative movement of the chain links (10;30;80) which are connected to one another, and when the drag chain (90) is stretched rectilinearly, can be returned to the gap width originally selected.

2. Drag chain according to Claim 1, characterized in that the first and second chain links (10;30) are formed in a single part and mirror-inverted with respect to one another, the side walls (20;40), which are orientated in the movement direction (X,X') and form a cable duct (98), which is orientated in the longitudinal direction of the drag chain (90), and also first flanges (22,22';42,42'), which are arranged laterally on said side walls, being arranged on the one and other side of the chain links (10;30).

3. Drag chain according to Claim 1, characterized in that the individual chain link (80) is formed in two parts of a lower part (80') and an upper part (80''), the individual lower parts (80') being connected to one another in an articulated manner and the individual upper parts (80") being formed such that they can be displaced transversely to the movement direction (X,X') of the drag chain (90) relative to the respective lower part (80').

4. Drag chain according to Claim 3, characterized in that the lower part (80') has a base plate (75) which is provided with a recess (75') orientated transversely to the movement direction (X,X') of the drag chain (90), and the upper part (80") has a moulded-on sliding piece (76) which is displaceably guided, by means of lateral, inclined first flanks (77,78), in the recess (75') of the lower part (80'), which recess is provided with correspondingly inclined second flanks (77',78').

5. Drag chain according to Claims 2 to 4, characterized in that legs (19,19';39,39'), which are orientated in the movement direction (X,X') of the drag chain (90) and can be brought in a form-closed manner into engagement with the first flanges (22,22';42,42';82,82') to prevent kinking of the individual chain links, are arranged on the side walls (20,21;40,41;81,81') of the chain links (10;30;80).

6. Drag chain according to Claim 1, characterized in that the side edges (12,13;32,33;72,72') of the covering plates (15;35;73), which side edges are orientated approximately transversely to the movement direction (X,X'), are designed such that they in each case taper conically in the direction of a front edge (11;31;71) opposite the side walls (20;40;70), and are arranged with respect to one another in such a manner that the clearances (C;C') which are provided between the covering plates (15;35;70) and which are in the form of a gap, are arranged such that they alternate obliquely inclined with respect to one another as seen in the movement direction (X,X').

7. Drag chain according to Claim 1, characterized in that each individual chain link (10;30;80) is provided on both ends, which are orientated in the movement direction (X,X'), with two first and second flanges (22,22' and 27,27';42,42' and 47,47';82,82' and 87,87') arranged at a parallel distance from one another, the flanges being arranged with respect to one another in such a manner that the second flanges of the second chain link are arranged between the first flanges of the first chain link, and said first chain link is mounted pivotably relative to the second chain link about an axis orientated transversely to the movement direction (X,X').

8. Drag chain according to Claims 1 and 7, characterized in that the individual chain links (10;30;80) are mounted pivotably relative to one another by means of pivot pins (26;46;86), which are moulded-on such that they protrude laterally on the base plate (16;36;75), in bores (25,25';45,45'), which are arranged correspondingly with respect to one another, of the first flanges (22,22';42,42').

9. Drag chain according to Claim 6, characterized in that the second flanges (27,27';47,47') are each provided with a bevelled web surface (28,28';48,48') which can be brought in a form-closed manner into engagement with the lower edge of the associated base plate (16;36) during the circular deflection of the chain links (10;30).

10. Drag chain according to Claim 9, characterized in that the bevel of the web surfaces (28,28';48,48';88,88') is dimensioned as a function of the bending radius (R) of the curved part (92) of the drag chain (90), and the bending radius (R) is dimensioned as a function of the line or lines (110) to be inserted into the cable duct (98).

11. Drag chain according to Claim 1, characterized in that the drag chain (90) is provided with any desired number of pairs of bolts (60,60' to 64,64') which are arranged spaced-apart in the longitudinal direction and laterally protruding on the individual chain links (10;30;80).

12. Drag chain according to Claim 11, characterized in that the chain links (10;30;80) are mounted, by means of the pairs of bolts (60,60' to 64,64'), between two guide rails (50,50') which are arranged at a parallel distance from each other, the guide rails (50,50') having, on two lower flanges (53,53') facing each other, a number of recesses (55,55',56,56',57,57') which are arranged at a distance from one another in the longitudinal direction and through which the pair of bolts (60,60' to 64,64') assigned to the relevant recess can be guided and brought out of engagement with the two flanges (53,53') when the drag chain (90) is deflected.

13. Drag chain according to Claims 11 and 12, characterized in that the pairs of bolts (60,60' to 64,64'), which are arranged at distances from one another on the chain links (10;30;80), and the recesses (55,55',56,56',57,57'), which are arranged at distances on the lower flanges (53,53') of the guide rails (50,50'), are arranged with respect to one another in such a manner that in the event of the drag chain (90) being deflected in the region of any selected pair of bolts (60,60' to 64,64'), at least one further pair of bolts, which is arranged subsequently, is supported on the lower flanges (53,53') and is guided between the guide rails (50,50').

14. Operating method for inserting at least one line into the drag chain according to Claim 1, characterized in that the individual line (110) is threaded in in the region of the curved part (92) in the movement direction (X,X') alternately from the one and other side of the drag chain (90) and is deposited in the cable duct (98).

15. Operating method according to Claim 14, characterized in that the threading-in and depositing of the individual line (110) is carried out with a simultaneous unwinding movement in the region of the curved part (92) of the drag chain (90).

16. Operating method according to Claims 13 to 15, characterized in that the lines (110) are threaded in individually or, using appropriate means, in a bunch, and are deposited and/or fastened in the longitudinal direction of the drag chain (90) on at least one of the base plates (16;36;75) of the chain links (10;30;80).

## Revendications

1. Chaîne d'entraînement comprenant plusieurs premier et second chaînons reliés en articulation l'un à l'autre, qui possèdent un profil en section transversale approximativement en ⊂ et qui forment ensemble une gouttière de câble (98) orientée dans la direction longitudinale de la chaîne d'entraînement (90), pour la réception d'au moins un élément conducteur (110), gouttière par laquelle de l'énergie peut être acheminée à une unité de consommation (95) effectuant un mouvement linéaire de va-et-vient par rapport à une source d'énergie (97), caractérisée en ce que les chaînons (10; 30; 80) munis respectivement d'une paroi latérale (20; 40; 70), d'une plaque de recouvrement (15; 35; 73) disposée contre la première citée et d'une plaque inférieure (16; 36; 75) disposée parallèlement et à distance de la dernière citée, sont disposés respectivement de telle sorte que leurs parois latérales (20; 40; 70), par rapport à la direction longitudinale et à la direction de mouvement de la chaîne d'entraînement (90), se trouvent en alternance, sur l'un ou l'autre côté de cette dernière, et en ce que, entre les arêtes latérales (12, 32; 13, 33) des plaques de recouvrement (15; 35; 73) tournées l'une vers l'autre et orientées approximativement en direction transversale par rapport à la direction de mouvement, on prévoit respectivement un écartement (C; C') en forme de fente, dans laquelle les écartements (C; C') en forme de fentes, lors du changement de direction en forme d'arc de la chaîne d'entraînement (90), s'agrandissent en ce qui concerne la largeur de l'écartement via le mouvement relatif des chaînons (10; 30; 80) reliés l'un à l'autre et, lorsque la chaîne d'entraînement (90) est étirée de manière rectiligne, peuvent reprendre la largeur d'écartement sélectionnée à l'origine.

2. Chaîne d'entraînement selon la revendication 1, caractérisée en ce que les premier et second chaînons (10; 30) sont réalisés en une seule pièce et de manière spéculaire l'un par rapport à l'autre, dans laquelle les parois latérales (20; 40) orientées dans la direction de mouvement (X, X') et formant une gouttière de câble (98) orientée dans la direction longitudinale de la chaîne d'entraînement (90), ainsi que des premières brides (22, 22'; 42, 42') montées latéralement par rapport aux parois latérales sont disposées sur l'un et l'autre côté des chaînons (10; 30).

3. Chaîne d'entraînement selon la revendication 1, caractérisée en ce que le chaînon individuel (80) est réalisé en deux parties comprenant une partie inférieure (80') et une partie supérieure (80"), dans laquelle les parties inférieures individuelles (80') sont reliées l'une à l'autre en articulation et les parties supérieures individuelles (80") sont réalisées en coulissement par rapport à la partie inférieure respective (80'), en direction transversale par rapport à la direction de mouvement (X, X') de la chaîne d'entraînement (90).

4. Chaîne d'entraînement selon la revendication 3, caractérisée en ce que la partie inférieure (80') présente une plaque inférieure (75) munie d'un évidement (75') orienté en direction transversale par rapport à la direction de mouvement (X, X') de la chaîne d'entraînement (90) et la partie supérieure (80") présente un coulisseau façonné (76) qui est guidé en coulissement avec des premiers flancs latéraux (77, 78) réalisés en inclinaison, dans l'évidement (75') de la partie inférieure (80') muni de seconds flancs (77', 78') réalisés en présentant une inclinaison de manière correspondante.

5. Chaîne d'entraînement selon les revendications 2 à 4, caractérisée en ce que des branches (19, 19'; 39, 39') sont disposées contre les parois latérales (20, 21; 40, 41; 81, 81') des chaînons (10; 30; 80) en étant orientées dans la direction de mouvement (X, X') de la chaîne d'entraînement (90) et en étant aptes à venir se disposer en engrènement positif avec les premières brides (22, 22'; 42, 42'; 82, 82') pour empêcher la déviation angulaire des chaînons individuels.

6. Chaîne d'entraînement selon la revendication 1, caractérisée en ce que les arêtes latérales (12, 13; 32, 33; 72, 72') des plaques de recouvrement (15; 35; 73) orientées approximativement en direction transversale par rapport à la direction de mouvement (X, X') sont réalisées respectivement en se rétrécissant progressivement à la manière d'un cône dans la direction d'une arête frontale (11; 31; 71) opposée à la paroi latérale (20; 40; 70) et sont disposées l'une par rapport à l'autre de telle sorte que les écartements (C; C') réalisés en forme de fentes et prévus entre les plaques de recouvrement (15; 35; 70), vu dans la direction de mouvement (X, X'), sont disposés en alternance en inclinaison réciproque.

7. Chaîne d'entraînement selon la revendication 1, caractérisée en ce que chaque chaînon individuel (10; 30; 80) est muni, sur les deux extrémités orientées dans la direction de mouvement (X, X'), de deux premières et secondes brides (22, 22' et 27, 27'; 42, 42' et 47, 47'; 82, 82' et 87, 87') disposées parallèlement l'une à l'autre et à distance l'une de l'autre, dans laquelle les brides sont disposées l'une par rapport à l'autre de telle sorte que les secondes brides du second chaînon sont disposés entre les premières brides du premier chaînon, ce dernier étant monté en pivotement, par rapport au second chaînon, autour d'un axe orienté en direction transversale par rapport à la direction de mouvement (X, X').

8. Chaîne d'entraînement selon les revendications 1 et 7, caractérisée en ce que les chaînons individuels (10; 30; 80) sont montés en pivotement relatif l'un par rapport à l'autre dans des alésages (25, 25'; 45, 45') des premières brides (22, 22'; 42, 42') disposés l'un par rapport à l'autre de manière correspondante, au moyen de pivots (26; 46; 86) façonnés en faisant saillie latéralement sur la plaque inférieure (16; 36; 75).

9. Chaîne d'entraînement selon la revendication 6, caractérisée en ce que les secondes brides (27, 27'; 47, 47') sont munies respectivement d'une surface nervurée (28, 28'; 48, 48') chanfreinée et apte à venir se disposer en engrènement positif avec l'arête inférieure de la plaque inférieure correspondante (16; 36) lors du changement de direction en forme d'arc des chaînons (10; 30).

10. Chaîne d'entraînement selon la revendication 9, caractérisée en ce que les chanfreins des surfaces nervurées (28, 28'; 48, 48'; 88, 88') sont dimensionnés en fonction du rayon de flexion (R) de la partie courbe (92) de la chaîne d'entraînement (90) et le rayon de flexion (R) est dimensionné en fonction du ou des éléments conducteurs (110) destinés à venir s'insérer dans la gouttière de câble (98).

11. Chaîne d'entraînement selon la revendication 1, caractérisée en ce que la chaîne d'entraînement (90) est munie d'un nombre quelconque de paires de boulons (60, 60' à 64, 64') répartis à une certaine distance l'un de l'autre en direction longitudinale et disposés en faisant saillie latéralement sur les chaînons individuels (10; 30; 80).

12. Chaîne d'entraînement selon la revendication 11, caractérisée en ce que les chaînons (10; 30; 80) sont montés au moyen des paires de boulons (60, 60' à 64, 64') entre deux rails de guidage (50, 50') disposés parallèlement l'un à l'autre et à distance l'un de l'autre, dans laquelle les rails de guidage (50, 50') présentent, sur deux brides inférieures (53, 53') orientées l'une vers l'autre, plusieurs évidements (55, 55', 56, 56', 57, 57') disposés à distance l'un de l'autre en direction longitudinale, à travers lesquels, lors du changement de direction de la chaîne d'entraînement (90), la paire de boulons (60, 60' à 64, 64') attribuée à l'évidement correspondant peut passer et se désengrener des deux brides (53, 53').

13. Chaîne d'entraînement selon les revendications 11 et 12, caractérisée en ce que les paires de boulons (60, 60' à 64, 64') disposées à distance les unes des autres sur les chaînons (10; 30; 80), ainsi que les évidements (55, 55', 56, 56', 57, 57') disposés à distance sur les brides inférieures (53, 53') des rails de guidage (50, 50') sont disposés les uns par rapport aux autres de telle sorte que, lors d'une sortie de la chaîne d'entraînement (90) dans la zone de n'importe quelle paire de boulons sélectionnée (60, 60' à 64, 64'), au moins une paire de boulons montée à la suite s'appuie encore sur les brides inférieures (53, 53') et est encore guidée entre les rails de guidage (50, 50').

14. Mode opératoire pour l'insertion d'au moins un élément conducteur dans la chaîne d'entraînement selon la revendication 1, caractérisé en ce que l'élément conducteur individuel (110) vient s'enfiler dans la zone de la partie courbe (92) dans la direction de mouvement (X, X') en alternance par l'un et par l'autre côté de la chaîne d'entraînement (90) et vient se poser dans la gouttière de câble (98).

15. Mode opératoire selon la revendication 14, caractérisé en ce que l'enfilage et la pose de l'élément conducteur individuel (110) sont mis en oeuvre avec un mouvement simultané de déroulement dans la zone de la partie courbe (92) de la chaîne d'entraînement (90).

16. Mode opératoire selon les revendications 13 à 15, caractérisé en ce que les éléments conducteurs (110) viennent s'enfiler à titre individuel ou en faisceaux à l'aide de moyens correspondants et viennent se poser, respectivement se fixer, dans la direction longitudinale de la chaîne d'entraînement (90), sur au moins une des plaques inférieures (16; 36; 75) des chaînons (10; 30; 80).
